(19) Europäisches Patentamt / European Patent Office / Office européen des brevets

(11) **EP 2 829 711 A1**

(12) **DEMANDE DE BREVET EUROPEEN**

(43) Date de publication:
**28.01.2015 Bulletin 2015/05**

(51) Int Cl.:
*F02D 41/00* (2006.01)   *F02M 25/07* (2006.01)
*F02D 41/04* (2006.01)   *F02D 41/14* (2006.01)

(21) Numéro de dépôt: **14177723.5**

(22) Date de dépôt: **18.07.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **26.07.2013   FR 1357420**

(71) Demandeur: **Valeo Systèmes de Contrôle Moteur 95800 Cergy Saint Christophe (FR)**

(72) Inventeurs:
• **Lutz, Philippe**
  **78100 Le Vesinet (FR)**
• **David, Florent**
  **92150 Suresnes (FR)**

(74) Mandataire: **Garcia, Christine**
**Propriété Intellectuelle**
**Valeo Systèmes de Contrôle Moteur**
**14, avenue des Béguines**
**95800 Cergy St Christophe (FR)**

(54) **Procédé et dispositif pour la détermination de la concentration des gaz d'échappement recirculant à l'entrée du répartiteur d'admission d'un moteur thermique**

(57)     Procédé de détermination de la concentration des gaz d'échappement recirculant à l'entrée du répartiteur d'admission (10) d'un moteur thermique (M) via une boucle de recirculation (20) dont la sortie (23) débouche dans le circuit d'admission (3) du moteur thermique (M), procédé dans lequel on détermine ladite concentration à l'aide d'une équation modélisant le parcours des gaz entre la sortie (23) de la boucle de recirculation (20) et ledit répartiteur d'admission (10), l'équation exprimant ladite concentration à un instant donné en fonction :
- de ladite concentration à un instant précédent, et
- de la concentration des gaz d'échappement à la sortie (23) de la boucle de recirculation (20) audit instant précédent.

**Fig. 2**

**Description**

La présente invention concerne la détermination de la concentration des gaz d'échappement recirculant à l'entrée du répartiteur d'admission d'un moteur thermique.

L'invention s'applique notamment, mais non exclusivement, dans le domaine automobile, le moteur thermique étant par exemple utilisé pour propulser un véhicule automobile.

La détermination de la concentration des gaz d'échappement recirculant à l'entrée du répartiteur d'admission du moteur thermique est souhaitable car ce taux détermine en partie les réglages à appliquer au moteur, par exemple l'avance à l'allumage, le débit de carburant ou la position d'une vanne ou papillon du circuit d'air du moteur thermique.

Au sens de l'invention, on désigne par « circuit d'air de moteur thermique » le circuit entre l'entrée d'admission et la sortie d'échappement du moteur thermique. Ce circuit d'air comprend dans l'exemple considéré un circuit d'admission, un circuit d'échappement, et une boucle de recirculation par laquelle transitent les gaz d'échappement pour être réinjectés à l'admission (EGR en anglais).

Il est connu de déterminer la concentration des gaz d'échappement recirculant à l'entrée du répartiteur d'admission d'un moteur thermique de manière analytique, à l'aide d'une mémoire tampon (*buffer* en anglais) stockant des valeurs et à l'aide de filtres du premier ordre. Une telle méthode de détermination est complexe à mettre en oeuvre, peu précise et coûteuse en terme de mémoire.

Il existe un besoin pour permettre de déterminer d'une façon relativement simple, précise et peu coûteuse la concentration des gaz d'échappement recirculant à l'entrée du répartiteur d'admission d'un moteur thermique.

L'invention vise à répondre à ce besoin et elle y parvient, selon l'un de ses aspects, à l'aide d'un procédé de détermination de la concentration des gaz d'échappement recirculant à l'entrée du répartiteur d'admission d'un moteur thermique via une boucle de recirculation dont la sortie débouche dans le circuit d'admission du moteur thermique, procédé dans lequel on détermine ladite concentration à l'aide d'une équation modélisant le parcours des gaz entre la sortie de la boucle de recirculation et ledit répartiteur d'admission, l'équation exprimant ladite concentration à un instant donné en fonction :

-   de ladite concentration à un instant précédent, et
-   de la concentration des gaz d'échappement à la sortie de la boucle de recirculation audit instant précédent.

Selon le procédé, la concentration des gaz d'échappement à l'entrée du répartiteur d'admission du moteur thermique est déterminée à l'aide d'un modèle physique du parcours des gaz d'échappement recirculant dans le circuit d'admission, et non par un calcul analytique à l'aide de valeurs stockées dans une mémoire tampon. Il n'est ainsi pas nécessaire d'avoir recours à une telle mémoire qui est coûteuse.

Le procédé selon l'invention peut permettre de déterminer avec une précision satisfaisante la concentration des gaz d'échappement recirculant à l'entrée du répartiteur d'admission. L'erreur par rapport à une mesure réelle peut être inférieure à 8% en valeur absolue, mieux être inférieure à 4% en valeur absolue, mieux être inférieure à 3%. En comparaison avec la méthode de détermination selon l'art antérieur, l'amélioration de précision apportée par le procédé selon l'invention est en particulier bénéfique dans les phases de fonctionnement transitoire du moteur, en particulier lors de phases d'accélération ou de décélération du moteur ou lors de changements de rapports de la boîte de vitesse.

Le circuit d'admission peut être dépourvu de ramification entre la sortie de la boucle de recirculation et l'entrée du répartiteur d'admission du moteur thermique. Autrement dit, les gaz provenant de l'entrée du circuit d'admission ou de la boucle de recirculation et s'écoulant dans le circuit d'admission en aval de la sortie de ladite boucle peuvent emprunter un unique chemin par lequel ils gagnent le répartiteur d'admission du moteur thermique.

La boucle de recirculation peut comprendre une vanne permettant de réguler le débit des gaz d'échappement réinjectés à l'admission du moteur thermique.

Un compresseur peut être interposé entre la sortie de la boucle de recirculation et l'entrée du répartiteur d'admission du moteur thermique. La boucle de recirculation peut être une boucle EGR basse pression, c'est-à-dire que l'entrée dans le circuit d'échappement de la boucle de recirculation est alors disposée en aval de la turbine du turbocompresseur tandis que la sortie dans le circuit d'admission de la boucle de recirculation est disposée en amont du compresseur du turbocompresseur.

Le moteur thermique est par exemple un moteur à essence. En variante, il peut s'agir d'un moteur diesel ou d'un moteur polycarburant. Le moteur peut fonctionner avec du « flex-fuel », du biocarburant ou du gpl.

Le moteur thermique peut être un moteur de véhicule automobile.

Une vanne doseuse peut être positionnée à l'entrée du répartiteur d'admission du moteur thermique. La concentration des gaz d'échappement à l'entrée du répartiteur d'admission peut être déterminée au niveau de ladite vanne doseuse.

Le circuit d'admission peut s'étendre entre la sortie de la boucle de recirculation et l'entrée du répartiteur d'admission sur une longueur L, et l'équation modélisant le parcours des gaz entre la sortie de la boucle de recirculation et le répartiteur d'admission peut s'écrire :

$$x_{EGR\,R}(t) = \left(1 - \frac{dx}{L}\right) \times x_{EGR\,R}(t - Te) + \frac{dx}{L} \times x_{EGR\,SA}(t - Te)$$

$x_{EGR\,R}(t)$ désignant la concentration des gaz d'échappement recirculant à l'entrée du répartiteur d'admission à l'instant donné « t »,

$x_{EGR\,R}(t-Te)$ désignant la concentration des gaz d'échappement recirculant à l'entrée du répartiteur d'admission à l'instant précédent « t-Te »,

$x_{EGR\,SA}(t-Te)$ désignant la concentration des gaz d'échappement recirculant à la sortie de la boucle de recirculation à l'instant précédent « t-Te », et

dx désignant la distance parcourue pendant la durée Te par les gaz entre la sortie de la boucle de recirculation et l'entrée du répartiteur d'admission.

La longueur L peut être calculée par addition de la longueur de portion(s) rectiligne(s) et de la longueur de portion(s) courbe(s) formant le circuit d'admission entre la sortie de la boucle de recirculation et l'entrée du répartiteur d'admission.

En utilisant l'équation ci-dessus de manière itérative et en partant d'une valeur initiale donnée pour la concentration des gaz d'échappement recirculant à l'entrée du répartiteur d'admission, on peut ainsi déterminer cette concentration à un instant donné.

La concentration des gaz d'échappement recirculant à la sortie de la boucle de recirculation peut être connue en calculant le rapport entre le débit massique des gaz d'échappement recirculant à la sortie de la boucle de recirculation et le débit massique des gaz au niveau de la vanne doseuse.

Le débit massique des gaz au niveau de la vanne doseuse peut être obtenu à l'aide d'un débitmètre ou à l'aide d'un modèle analytique au niveau de la vanne doseuse.

Le débit massique des gaz d'échappement recirculant à la sortie de la boucle de recirculation peut être calculé à l'aide de la formule de St Venant :

$$Q_{EGR} = S_{EGR} \times \frac{P_e}{\sqrt{r \times T_{EGR}}} \sqrt{\frac{2 \times \gamma}{\gamma - 1} \times \left[\left(\frac{P_f}{P_e}\right)^{\frac{2}{\gamma}} - \left(\frac{P_f}{P_e}\right)^{\frac{\gamma+1}{\gamma}}\right]}$$

$T_{EGR}$ désignant la température des gaz d'échappement dans la boucle de recirculation en amont de la vanne de régulation de ladite boucle,

$S_{EGR}$ désignant la section de passage des gaz d'échappement dans la boucle de recirculation au niveau de la vanne de régulation de ladite boucle,

$P_e$ étant la pression des gaz d'échappement dans la boucle de recirculation en amont de la vanne de régulation de ladite boucle,

$P_f$ étant la pression des gaz d'échappement dans la boucle de recirculation en aval de la vanne de régulation de ladite boucle,

r étant la constante des gaz parfaits, de l'ordre de 287, et

$\gamma$ étant le gamma des gaz parfaits, de l'ordre de 1,37.

La distance dx parcourue par les gaz pendant la durée Te entre la sortie de la boucle de recirculation et l'entrée du répartiteur d'admission peut être exprimée à l'aide de l'équation suivante:

$$dx = \frac{T}{P} \times \left(r \times \frac{Te}{S}\right) \times Q_{pap},$$

T étant la température à l'entrée, c'est-à-dire immédiatement en amont, de la vanne doseuse,

P étant la pression à l'entrée, c'est-à-dire immédiatement en amont, de la vanne doseuse,

r étant la constante des gaz parfaits,

S étant la section moyenne entre la sortie de la boucle de recirculation et l'entrée du répartiteur d'admission du conduit formant le circuit d'admission, et

$Q_{pap}$ étant le débit massique des gaz au niveau de la vanne doseuse.

La valeur obtenue pour dx à l'aide de l'équation ci-dessus peut ensuite être utilisée dans l'équation figurant plus haut et reliant entre elles les différentes concentrations $X_{EGR\ R}(t)$, $X_{EGR\ R}(t-Te)$ et $X_{EGR\ SA}(t-Te)$.

Un système d'aiguillage peut être prévu, ce système d'aiguillage pouvant passer de l'une à l'autre des configurations suivantes : une configuration permettant l'acheminement dans le répartiteur d'admission du seul air frais issu de l'entrée du circuit d'admission, et une pluralité de configurations permettant l'acheminement dans le répartiteur d'admission d'un mélange d'air frais et de gaz d'échappement recirculant via la boucle de recirculation, les configurations de ladite pluralité différant les unes des autres par la proportion des gaz d'échappement au sein du mélange.

Le système d'aiguillage peut comprendre une vanne trois voies ayant une entrée dans le circuit d'admission en amont de la sortie de la boucle de recirculation, une entrée dans la boucle de recirculation, et une sortie dans le circuit d'admission en aval de la sortie de la boucle de recirculation. La vanne de régulation de la boucle de recirculation mentionnée ci-dessus fait alors partie de cette vanne trois voies.

La vanne trois voies est par exemple réalisée selon l'enseignement de la demande de brevet WO 2010/000752.

En variante, le système d'aiguillage comprend deux vannes deux voies, l'une de ces vannes étant disposée dans le circuit d'admission en amont de la sortie de la boucle de recirculation, et l'autre de ces vannes étant disposée dans la boucle de recirculation, étant alors la vanne de régulation mentionnée précédemment. Ces deux vannes deux voies peuvent être commandées par une unité de commande de manière à ce que le système d'aiguillage évolue entre les configurations mentionnées précédemment.

Le procédé peut comprendre l'étape selon laquelle on détermine la concentration des gaz d'échappement recirculant dans les cylindres du moteur thermique en fonction:

- de la concentration des gaz d'échappement recirculant à l'entrée du répartiteur d'admission, et
- d'un modèle du répartiteur d'admission.

On peut établir un modèle du répartiteur d'admission en faisant un bilan des espèces entrant/sortant dans ce répartiteur, à savoir l'air frais, les gaz d'échappement recirculant et les vapeurs d'essence, afin d'estimer la quantité d'air frais, la pression et la température en sortie du répartiteur et en entrée des cylindres du moteur thermique.

La boucle de recirculation peut comprendre un refroidisseur, notamment un refroidisseur à eau. Ce refroidisseur peut être disposé entre l'entrée de ladite boucle et la vanne de régulation de ladite boucle.

Un refroidisseur peut par ailleurs être disposé dans le circuit d'admission entre la sortie de la boucle de recirculation et le répartiteur d'admission du moteur.

L'invention a encore pour objet, selon un autre de ses aspects, un dispositif de détermination de la concentration des gaz d'échappement recirculant à l'entrée du répartiteur d'admission d'un moteur thermique via une boucle de recirculation dont la sortie débouche dans le circuit d'admission du moteur thermique, le dispositif étant configuré pour déterminer ladite concentration à l'aide d'une équation modélisant le parcours des gaz entre la sortie de la boucle de recirculation et ledit répartiteur d'admission, l'équation exprimant ladite concentration à un instant donné en fonction :

- de ladite concentration à un instant précédent, et
- de la concentration des gaz d'échappement à la sortie de la boucle de recirculation audit instant précédent.

Tout ou partie des caractéristiques mentionnées ci-dessus en rapport avec le procédé s'appliquent au dispositif.

L'invention pourra être mieux comprise à la lecture de la description qui va suivre d'un exemple non limitatif de mise en oeuvre de celle-ci et à l'examen du dessin annexé sur lequel :

- la figure 1 représente de façon schématique un exemple d'environnement dans lequel peut être mise en oeuvre l'invention, et
- la figure 2 représente en détail la portion du circuit d'admission empruntée par les gaz d'échappement réinjectés à l'admission du moteur thermique.

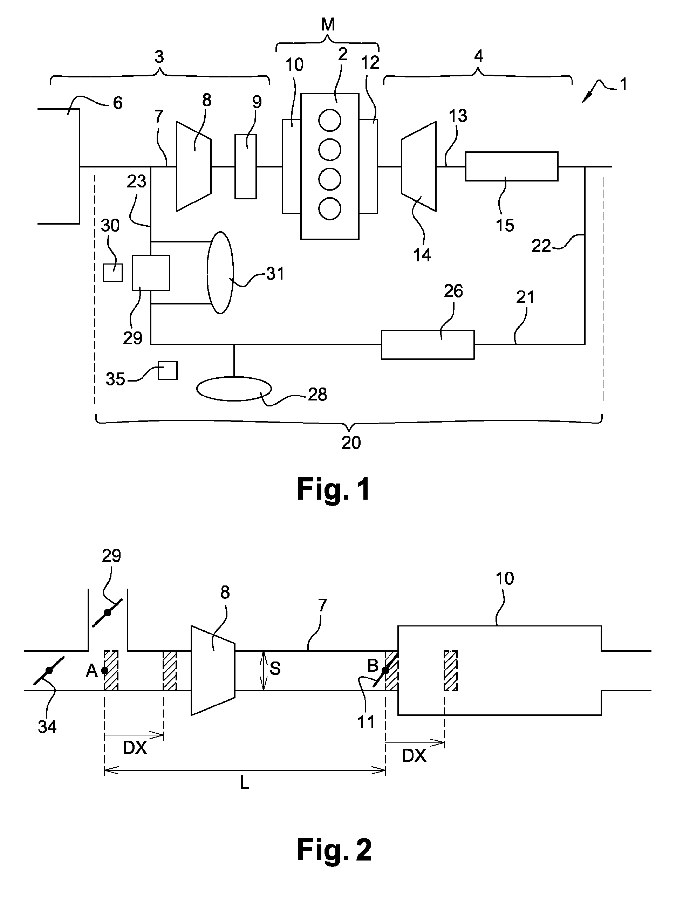

On a représenté à la figure 1 un ensemble 1 dans lequel peut être mis en oeuvre un procédé selon l'invention. Cet ensemble 1 est dans l'exemple considéré intégré à un véhicule et comprend un moteur thermique M à combustion interne. Le moteur M comporte une chambre de combustion 2 comportant une pluralité de cylindres, au nombre de quatre dans l'exemple décrit, et elle est destinée à recevoir un mélange de comburant et de carburant. Dans l'exemple décrit, le carburant est de l'essence mais l'invention n'est pas limitée à un tel exemple de carburant, pouvant aussi s'appliquer à l'emploi de diesel comme carburant, par exemple.

L'ensemble 1 comprend un circuit d'admission 3 et un circuit d'échappement 4.

Le circuit d'admission 3 comporte dans l'exemple considéré un filtre à air 6 et un conduit 7 d'admission pour l'air frais. Le circuit d'admission 3 comprend encore dans cet exemple un compresseur 8 de turbocompresseur, et un refroidisseur 9, permettant le refroidissement des gaz issus du compresseur 8. Ce refroidisseur 9 est communément appelé "RAS", ce qui signifie "refroidisseur d'air de suralimentation". La sortie du refroidisseur 9 peut être reliée via une vanne doseuse 11 non représentée sur la figure 1 au répartiteur d'admission 10 du moteur M, permettant aux gaz de gagner la chambre de combustion 2 du moteur M.

Le répartiteur d'échappement 12 du moteur est relié à l'entrée du circuit 4 d'échappement. Ce circuit d'échappement 4 comprend un conduit 13 d'échappement. Le circuit d'échappement 4 comporte par ailleurs une turbine 14 de turbocompresseur, solidaire en rotation du compresseur 8 du circuit d'admission. La turbine 14 est entraînée par les gaz d'échappement circulant dans le circuit d'échappement 4. La sortie de la turbine 14 est ici reliée à un catalyseur 15 qui est lui-même relié à la sortie du circuit d'échappement 4.

L'ensemble 1 comprend encore une boucle de recirculation 20 permettant à tout ou partie des gaz d'échappement circulant dans le circuit d'échappement 4 d'être réinjectés dans le moteur M. Cette boucle de recirculation comporte un conduit 21 s'étendant entre une entrée 22 dans le circuit d'échappement 3 et une sortie 23 dans le circuit d'admission 3.

L'entrée 22 de la boucle de recirculation 20, par laquelle des gaz d'échappement du circuit d'échappement 4 sont prélevés, est dans l'exemple considéré disposée en aval du catalyseur 15. La sortie 23 de la boucle de recirculation, par laquelle des gaz d'échappement sont réinjectés en amont du moteur M, est dans l'exemple considéré disposée entre le filtre à air 6 et le compresseur 8. Comme on peut le voir sur la figure 1, le circuit d'admission 3 est ici dépourvu de ramification entre la sortie 23 de la boucle de recirculation 20 et l'entrée du répartiteur d'admission 10.

La boucle de recirculation 20 est dans cet exemple une boucle basse pression puisque les gaz d'échappement recirculant dans cette boucle 20 sont prélevés en sortie du circuit d'échappement 4 en aval de la turbine 14, où ils sont à relativement basse pression.

Comme on peut le voir sur la figure 1, la boucle 20 comprend dans l'exemple considéré un refroidisseur 26 des gaz d'échappement circulant dans cette boucle 20. La boucle 20 comprend encore dans l'exemple considéré un capteur de température 28 et qui est ici disposé en aval du refroidisseur 26, en amont d'une vanne 29 qui permet de réguler le débit des gaz d'échappement dans la boucle 20.

La vanne 29 fait partie d'un système d'aiguillage pouvant passer de l'une à l'autre des configurations suivantes : une configuration permettant l'acheminement dans le répartiteur d'admission 10 du seul air frais issu de l'entrée du circuit d'admission 3 et une pluralité de configurations permettant l'acheminement dans le répartiteur d'admission 10 d'un mélange d'air frais et de gaz d'échappement recirculant via la boucle de recirculation 20.

Dans l'exemple des figures 1 et 2, la vanne 29 est une vanne indépendante, encore appelée « vanne simple ». Cette vanne 29 est configurée pour passer d'une position fermée dans laquelle aucun gaz ne peut circuler dans la boucle de recirculation 20 à plusieurs positions ouvertes, différant l'une de l'autre par le degré d'ouverture de ladite vanne 29. La vanne 29 peut par exemple être configurée pour ne présenter qu'un nombre prédéfini de positions ouvertes, par exemple trois ou quatre. Cette vanne 29 comporte un volet non représenté sur la figure 1.

La vanne 29 est disposée dans une portion rectiligne du conduit 21, et la position de cette vanne 29 peut être caractérisée par l'angle que fait le volet avec l'axe de ladite portion du conduit 21. Dans l'exemple considéré, lorsque la vanne 29 est en position fermée, l'angle formé entre le volet et ledit axe vaut 90°, tandis que lorsque la vanne 29 est en position de pleine ouverture, cet angle peut être nul.

Afin de déterminer la position de la vanne 29, un capteur 30 délivrant une valeur d'une grandeur représentative de la position de la vanne 29 peut être utilisé. Cette grandeur permet par exemple de déterminer le degré d'ouverture de la vanne, exprimé par l'angle que fait le volet avec ledit axe, comme expliqué ci-dessus.

Comme représenté sur la figure 1, un capteur 31 mesurant la différence de pression aux bornes de la vanne 29 peut être utilisé.

La boucle de recirculation 20 peut être dépourvue de tout autre capteur que le capteur de température 28, le capteur 30 permettant de déterminer la position de la vanne 29, et le capteur 31 mesurant la différence de pression aux bornes de ladite vanne 29.

Un autre capteur non représenté peut être présent dans le circuit d'admission 3, ce capteur étant notamment disposé en amont du compresseur 8 et en aval de la sortie 23 de la boucle de recirculation 20.

Dans l'exemple considéré, le système d'aiguillage comprend, en plus de la vanne 29, une vanne 34 disposée dans le circuit d'admission 3 en amont de la sortie 23 de la boucle de recirculation 20, et qui permet de réguler le débit de l'air frais circulant dans le circuit d'admission 3 en aval de la sortie 23 de la boucle de recirculation 20.

L'ensemble comprend un dispositif 35 de détermination de la concentration des gaz d'échappement recirculant à l'entrée du répartiteur d'admission 10, ce dispositif 35 pouvant ou non être intégré à l'unité de contrôle moteur (ECU) du véhicule. Le dispositif 35 met par exemple en oeuvre une unité de traitement numérique, par exemple un ou plusieurs microcontrôleurs.

Afin de déterminer la concentration des gaz d'échappement recirculant à l'entrée du répartiteur d'admission 10, le dispositif 35 utilise une équation modélisant le parcours des gaz entre la sortie 23 de la boucle de recirculation

20 et le répartiteur d'admission 10. Cette équation exprime la concentration que l'on cherche déterminer à un instant donné (t) en fonction :

- de ladite concentration à un instant précédent, et
- de la concentration des gaz d'échappement à la sortie 23 de la boucle de recirculation 20 audit instant précédent.

La figure 2 représente plus en détail un exemple de portion du circuit d'admission 3 entre la sortie 23 de la boucle de recirculation 20 et l'entrée du répartiteur d'admission 10. Comme on peut le voir sur cette figure 2, cette portion peut s'étendre sur une longueur L, et l'équation modélisant le parcours des gaz entre la sortie 23 de la boucle de recirculation 20 et le répartiteur d'admission 10 et qui est utilisée par le dispositif 35 peut alors s'écrire :

$$x_{EGR\,R}(t) = \left(1 - \frac{dx}{L}\right) \times x_{EGR\,R}(t - Te) + \frac{dx}{L} \times x_{EGR\,SA}(t - Te)$$

$x_{EGR\,R}(t)$ désignant la concentration des gaz d'échappement recirculant à l'entrée du répartiteur d'admission 10, c'est-à-dire en B avec les notations de la figure 2, à l'instant donné « t », $x_{EGR\,R}(t-Te)$ désignant ladite concentration à l'instant précédent « t-Te »,

$x_{EGR\,SA}(t-Te)$ désignant la concentration des gaz d'échappement recirculant à la sortie 23 de la boucle de recirculation 20, c'est-à-dire en A avec les notations de la figure 2, à l'instant précédent « t-Te », et

dx désignant la distance parcourue pendant la durée Te par les gaz entre la sortie 23 de la boucle de recirculation 20 et l'entrée du répartiteur d'admission 10.

Lors du calcul de la concentration $x_{EGR\,R}(t)$ des gaz d'échappement recirculant à l'entrée du répartiteur d'admission 10, on procède par itération en choisissant par exemple une valeur de concentration $x_{EGR\,R}(0)$ nulle.

La distance dx peut être calculée comme suit:

$$dx = \frac{T}{P} \times \left(r \times \frac{Te}{S}\right) \times Q_{pap},$$

T étant la température à l'entrée de la vanne doseuse 11,

P étant la pression à l'entrée de la vanne doseuse 11,

r étant la constante des gaz parfaits,

S étant la section moyenne entre la sortie 23 de ladite boucle 20 et l'entrée du répartiteur d'admission 10 du conduit 7 formant le circuit d'admission 3, et

$Q_{pap}$ étant le débit massique des gaz en entrée de la vanne doseuse 11, ce débit massique pouvant être fourni par un débitmètre.

La concentration $x_{EGR\,R}$ des gaz d'échappement recirculant à l'entrée du répartiteur d'admission 10 est par exemple obtenue en divisant le débit massique des gaz d'échappement recirculant à la sortie 23 de la boucle de recirculation 20 par le débit massique $Q_{pap}$.

Le débit massique des gaz d'échappement recirculant à la sortie 23 de la boucle de recirculation est notamment calculé à l'aide de la formule de St Venant :

$$Q_{EGR} = S_{EGR} \times \frac{P_e}{\sqrt{r \times T_{EGR}}} \sqrt{\frac{2 \times \gamma}{\gamma - 1} \times \left[\left(\frac{P_f}{P_e}\right)^{\frac{2}{\gamma}} - \left(\frac{P_f}{P_e}\right)^{\frac{\gamma+1}{\gamma}}\right]}$$

$T_{EGR}$ désignant la température des gaz d'échappement dans la boucle de recirculation 20 en amont de la vanne 29, cette température étant fournie ici par le capteur de température 28, $S_{EGR}$ désignant la section de passage des gaz d'échappement dans la boucle de recirculation 20 au niveau de la vanne 29,

$P_e$ étant la pression des gaz d'échappement en amont de la vanne 29,

$P_f$ étant la pression des gaz d'échappement en aval de la vanne 29,

r étant la constante des gaz parfaits, de l'ordre de 287, et

$\gamma$ étant le gamma des gaz parfaits, de l'ordre de 1,37.

Connaissant la valeur de la concentration des gaz d'échappement recirculant à l'entrée du répartiteur d'admission 10, on peut alors déterminer la valeur de la concentration des gaz d'échappement recirculant dans les cylindres de la chambre de combustion 2. On peut utiliser dans ce but un modèle du répartiteur d'admission 10.

Ce modèle du répartiteur d'admission 10 est par exemple établi en faisant un bilan des espèces entrant/sortant dans ce répartiteur 10, à savoir l'air frais, les gaz d'échappement recirculant et les vapeurs d'essence, afin d'estimer la quantité d'air frais, la pression et la température en sortie du répartiteur 10 et en entrée des cylindres de la chambre de combustion 2 du moteur thermique M.

L'invention n'est pas limitée à l'exemple qui vient d'être décrit.

En particulier, la vanne 29 n'est pas nécessairement une vanne indépendante. Elle peut faire partie d'une vanne plus complexe, telle qu'une vanne trois voies permettant également de réguler le débit d'air frais dans le circuit d'admission 3. Les vannes 29 et 34 sont alors remplacées par une seule vanne trois voies.

L'expression « comprenant un » doit être comprise comme synonyme de l'expression « comprenant au moins un », sauf lorsque le contraire est spécifié.

**Revendications**

1. Procédé de détermination de la concentration des gaz d'échappement recirculant à l'entrée du répartiteur d'admission (10) d'un moteur thermique (M) via une boucle de recirculation (20) dont la sortie (23) débouche dans le circuit d'admission (3) du moteur thermique (M),

   procédé dans lequel on détermine ladite concentration à l'aide d'une équation modélisant le parcours des gaz entre la sortie (23) de la boucle de recirculation (20) et ledit répartiteur d'admission (10), l'équation exprimant ladite concentration à un instant donné en fonction :

   - de ladite concentration à un instant précédent, et
   - de la concentration des gaz d'échappement à la sortie (23) de la boucle de recirculation (20) audit instant précédent.

2. Procédé selon la revendication 1, le circuit d'admission (3) étant dépourvu de ramification entre la sortie (23) de la boucle de recirculation (20) et l'entrée du répartiteur d'admission (10) du moteur thermique (M).

3. Procédé selon la revendication 1 ou 2, la boucle de recirculation (20) comprenant une vanne (29) permettant de réguler le débit des gaz d'échappement réinjectés à l'admission du moteur thermique (M).

4. Procédé selon l'une quelconque des revendications précédentes, la boucle de recirculation (20) étant une boucle EGR basse pression.

5. Procédé selon l'une quelconque des revendications précédentes, une vanne doseuse (11) étant positionnée à l'entrée du répartiteur d'admission (10) du moteur thermique (M).

6. Procédé selon l'une quelconque des revendications précédentes, le circuit d'admission (3) s'étendant entre la sortie (23) de la boucle de recirculation (20) et l'entrée du répartiteur d'admission (10) sur une longueur L, et l'équation modélisant le parcours des gaz entre la sortie (23) de la boucle de recirculation (20) et le répartiteur d'admission (10) s'écrivant :

$$x_{EGR\,R}(t) = \left(1 - \frac{dx}{L}\right) \times x_{EGR\,R}(t - Te) + \frac{dx}{L} \times x_{EGR\,SA}(t - Te)$$

$x_{EGR\,R}(t)$ désignant la concentration des gaz d'échappement recirculant à l'entrée du répartiteur d'admission (10) à l'instant donné « t »,

$x_{EGR\,R}(t-Te)$ désignant la concentration des gaz d'échappement recirculant à l'entrée du répartiteur d'admission (10) à l'instant précédent « t-Te »,

$x_{EGR\,SA}(t-Te)$ désignant la concentration des gaz d'échappement recirculant à la sortie (23) de la boucle de recirculation (20) à l'instant précédent « t-Te », et

dx désignant la distance parcourue pendant la durée Te par les gaz entre la sortie (23) de la boucle de recirculation (20) et l'entrée du répartiteur d'admission (10).

7. Procédé selon les revendications 5 et 6, dans lequel on utilise l'équation suivante pour exprimer la distance dx parcourue pendant la durée Te par les gaz entre la sortie (23) de la boucle de recirculation (20) et l'entrée du répartiteur d'admission (10) :

$$dx = \frac{T}{P} \times \left(r \times \frac{Te}{S}\right) \times Q_{pap},$$

T étant la température à l'entrée de la vanne doseuse (11),
P étant la pression à l'entrée de la vanne doseuse (11),
r étant la constante des gaz parfaits,
S étant la section moyenne entre la sortie (23) de ladite boucle (20) et l'entrée du répartiteur d'admission (10) du conduit (7) formant le circuit d'admission (3), et
$Q_{pap}$ étant le débit massique au niveau de la vanne doseuse (11).

**8.** Procédé selon l'une quelconque des revendications précédentes, un système d'aiguillage (29, 34) étant prévu, ce système d'aiguillage pouvant passer de l'une à l'autre des configurations suivantes : une configuration permettant l'acheminement dans le répartiteur d'admission (10) du seul air frais issu de l'entrée du circuit d'admission (3), une configuration permettant l'acheminement dans le répartiteur d'admission (10) des seuls gaz d'échappement recirculant via la boucle de recirculation (20), et une pluralité de configurations permettant l'acheminement dans le répartiteur d'admission (10) d'un mélange d'air frais et de gaz d'échappement recirculant via la boucle de recirculation (20), les configurations de ladite pluralité différant les unes des autres par la proportion de gaz d'échappement au sein du mélange.

**9.** Procédé selon les revendications 3 et 8, le système d'aiguillage comprenant deux vannes deux voies, l'une (34) de ces vannes étant disposée dans le circuit d'admission (3) en amont de la sortie (23) de la boucle de recirculation (20), et l'autre (29) de ces vannes étant la vanne permettant de réguler le débit des gaz d'échappement réinjectés à l'admission du moteur thermique.

**10.** Dispositif (35) de détermination de la concentration des gaz d'échappement recirculant à l'entrée du répartiteur d'admission (10) d'un moteur thermique (M) via une boucle de recirculation (20) dont la sortie (23) débouche dans le circuit d'admission (3) du moteur thermique (M), le dispositif étant configuré pour déterminer ladite concentration à l'aide d'une équation modélisant le parcours des gaz entre la sortie (23) de la boucle de recirculation (20) et ledit répartiteur d'admission (10), l'équation exprimant ladite concentration à un instant donné (t) en fonction :

- de ladite concentration à un instant précédent (t-Te), et
- de la concentration des gaz d'échappement à la sortie (23) de la boucle de recirculation (20) audit instant précédent (t-Te).

**Fig. 1**

**Fig. 2**

Europäisches
Patentamt

European
Patent Office

Office européen
des brevets

**RAPPORT DE RECHERCHE EUROPEENNE**

Numéro de la demande

EP 14 17 7723

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>Y<br>A | FR 2 947 007 A1 (RENAULT SAS [FR])<br>24 décembre 2010 (2010-12-24)<br>* page 7, ligne 1 - ligne 9; figures 1,4 *<br>* pages 13-14 *<br>----- | 1-5,10<br>8,9<br>6,7 | INV.<br>F02D41/00<br>F02M25/07<br><br>ADD.<br>F02D41/04<br>F02D41/14 |
| Y | EP 2 397 676 A1 (HONDA MOTOR CO LTD [JP])<br>21 décembre 2011 (2011-12-21)<br>* alinéas [0105] - [0107]; figure 6 *<br>----- | 8,9 | |
| A | WO 2004/055344 A1 (TOYOTA MOTOR CO LTD [JP]; KOBAYASHI DAISUKE [JP]; MUTO HARUFUMI [JP];)<br>1 juillet 2004 (2004-07-01)<br>* alinéas [0111] - [0114]; figures 15,16 *<br>----- | 1,10 | |

DOMAINES TECHNIQUES
RECHERCHES (IPC)

F01D
F02D

Le présent rapport a été établi pour toutes les revendications

| Lieu de la recherche | Date d'achèvement de la recherche | Examinateur |
|---|---|---|
| La Haye | 11 décembre 2014 | Martínez Hurtado, L |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

.............................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 14 17 7723

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-12-2014

| Document brevet cité au rapport de recherche | Date de publication | Membre(s) de la famille de brevet(s) | Date de publication |
|---|---|---|---|
| FR 2947007 A1 | 24-12-2010 | AUCUN | |
| EP 2397676 A1 | 21-12-2011 | EP 2397676 A1 | 21-12-2011 |
| | | JP 5028509 B2 | 19-09-2012 |
| | | JP 2012002123 A | 05-01-2012 |
| | | US 2011313634 A1 | 22-12-2011 |
| WO 2004055344 A1 | 01-07-2004 | AU 2003285765 A1 | 09-07-2004 |
| | | CN 1729357 A | 01-02-2006 |
| | | EP 1573186 A1 | 14-09-2005 |
| | | EP 2264300 A2 | 22-12-2010 |
| | | JP 3900081 B2 | 04-04-2007 |
| | | JP 2004197620 A | 15-07-2004 |
| | | KR 20050085764 A | 29-08-2005 |
| | | KR 20060129104 A | 14-12-2006 |
| | | US 2006235603 A1 | 19-10-2006 |
| | | WO 2004055344 A1 | 01-07-2004 |

EPO FORM P0460

Pour tout renseignement concernant cette annexe : voir Journal Officiel de l'Office européen des brevets, No.12/82

**EP 2 829 711 A1**

**RÉFÉRENCES CITÉES DANS LA DESCRIPTION**

**Documents brevets cités dans la description**

- WO 2010000752 A